# EUROPÄISCHE PATENTANMELDUNG

(11) **EP 2 641 801 A2**
(43) Veröffentlichungstag der Anmeldung: **25.09.2013**
(21) Anmeldenummer: 13154392.8
(22) Anmeldetag: 07.02.2013
(51) Int. Cl.: B60W 20/00, B60W 30/18, B60W 50/14, B60K 6/48, B60W 10/11

(54) **Verfahren zum Betreiben eines Antriebsstrangs eines Fahrzeugs mit Parallel-Hybrid-Antrieb**

(30) Priorität: 23.03.2012 DE 102012204720
(71) Anmelder: ZF Friedrichshafen AG, 88038 Friedrichshafen (DE)
(72) Erfinder: Baur, Simon, 88099 Neukirch (DE); Keer, Reiner, 88149 Nonnenhorn (DE)

(57) **Zusammenfassung**

Die Erfindung betrifft ein Verfahren zum Betreiben eines Antriebsstrangs eines Fahrzeugs mit Parallel-Hybrid-Antrieb, wobei der Antriebsstrang ein Antriebsaggregat mit einem Verbrennungsmotor (2) und einer elektrischen Maschine (4), eine zwischen Verbrennungsmotor (2) und elektrischer Maschine (4) geschaltete Kupplung (3) sowie ein automatisches Schaltgetriebe (5) umfasst, welches zwischen dem Antriebsaggregat und einem Abtrieb (6) angeordnet ist. In dem erfindungsgemäßen Verfahren ist eine Start/Stopp-Funktion vorgesehen, durch welche bei Vorliegen einer oder mehrerer vorbestimmter Bedingungen der Verbrennungsmotor (2) bei Stillstand des Fahrzeugs abgeschaltet und ein eingelegter Gang im Schaltgetriebe (5) ausgelegt wird. Das erfindungsgemäße Verfahren zeichnet sich dadurch aus, dass beim Abschalten des Verbrennungsmotors über die Start/Stopp-Funktion dem Fahrer des Fahrzeugs der zukünftige Gang des Schaltgetriebes (5) signalisiert wird, der beim Wiederanfahren des Fahrzeugs nach Beendigung der Start/Stopp-Funktion im Schaltgetriebe (5) eingelegt wird.

## Beschreibung

Die Erfindung betrifft ein Verfahren zum Betreiben eines Antriebsstrangs eines Fahrzeugs mit Parallel-Hybrid-Antrieb.

Die Hauptkomponenten eines Antriebsstrangs eines Fahrzeugs mit Hybridantrieb sind ein Antriebsaggregat mit einem Verbrennungsmotor und einer elektrischen Maschine sowie ein Getriebe. Das Getriebe wandelt Drehmomente und Drehzahlen und setzt so das Zugkraftangebot des Antriebsaggregats um.

Bei einem Antriebsstrang eines Fahrzeugs mit einem sog. Parallel-Hybrid-Antrieb können Verbrennungsmotor und elektrische Maschine gemeinsam auf den Antriebsstrang wirken. Dabei ist zwischen dem Verbrennungsmotor und der elektrischen Maschine eine Kupplung geschaltet, über die der Verbrennungsmotor vom Antriebsstrang abgekoppelt werden kann. Zur Einsparung von Kraftstoff ist es aus dem Stand der Technik bekannt, eine sog. Start/Stopp-Funktion in einem Parallel-Hybrid-Antriebsstrang zu implementieren. Dabei wird bei Vorliegen einer oder mehrerer vorbestimmter Bedingungen bei Stillstand des Fahrzeugs der Verbrennungsmotor abgeschaltet. Bei Fortsetzung der Fahrt wird das Anlassen des Verbrennungsmotors in der Regel über die elektrische Maschine des Antriebsstrangs bewirkt, wofür die Kupplung zwischen Verbrennungsmotor und elektrischer Maschine geschlossen wird.

Wird die oben beschriebene Start/Stopp-Funktionalität in einem Fahrzeug mit automatischem Schaltgetriebe verwendet, wird beim Abschalten des Verbrennungsmotors mittels der Start/Stopp-Funktion der Gang aus dem Getriebe ausgelegt, d.h. das Schaltgetriebe wird in den Zustand "Neutral" versetzt. Hierdurch wird erreicht, dass der Verbrennungsmotor über die elektrische Maschine wieder angelassen werden kann, denn zwischen elektrischer Maschine und Schaltgetriebe ist üblicherweise keine Kupplung vorgesehen, so dass ein Anlassen des Verbrennungsmotors mit eingelegtem Gang zu einem unerwünschten Anfahren des Fahrzeugs führen würde.

Im Betrieb des Antriebsstrangs eines Fahrzeugs mit Parallel-Hybrid-Antrieb und automatischem Schaltgetriebe wird dem Fahrer herkömmlicherweise immer der aktuelle Zustand des Schaltgetriebes signalisiert. Diese Information ist jedoch für den Fahrer bei einer im Rahmen der Start/Stopp-Funktionalität bewirkten Abschaltung des Motors nicht hilfreich, da in diesem Fall die Neutral-Stellung angezeigt wird, welche dem Fahrer keine Hinweise auf das Verhalten des Fahrzeugs beim Wiederanfahren gibt.

Aufgabe der Erfindung ist es deshalb, die Signalisierung für den Fahrer in einem Verfahren zum Betreiben eines Antriebsstrangs eines Fahrzeugs mit Parallel-Hybrid-Antrieb zu verbessern.

Diese Aufgabe wird durch das Verfahren gemäß Patentanspruch 1 bzw. die Vorrichtung gemäß Patentanspruch 8 gelöst. Weiterbildungen der Erfindung sind in den abhängigen Ansprüchen definiert.

Das erfindungsgemäße Verfahren dient zum Betreiben eines Antriebsstrangs eines Fahrzeugs mit Parallel-Hybrid-Antrieb, insbesondere eines Kraftfahrzeugs und vorzugsweise eines Nutzfahrzeugs, wie z.B. eines LKWs oder eines Fahrzeugs zur Personenbeförderung. Der Antriebsstrang umfasst in an sich bekannter Weise ein Antriebsaggregat mit einem Verbrennungsmotor und einer elektrischen Maschine, eine zwischen Verbrennungsmotor und elektrischer Maschine geschaltete Kupplung sowie ein Getriebe. Zwischen Antriebsaggregat und Getriebe ist in einer bevorzugten Ausführungsform eine Verbindung ohne Kupplung vorgesehen. Das Getriebe ist ein automatisches Schaltgetriebe, welches zwischen dem Antriebsaggregat und einem Abtrieb angeordnet ist. In dem Verfahren ist ferner eine Start/Stopp-Funktion realisiert, durch welche bei Vorliegen einer oder mehrerer vorbestimmter Bedingungen der Verbrennungsmotor bei Stillstand des Fahrzeugs abgeschaltet und ein eingelegter Gang im automatischen Schaltgetriebe ausgelegt wird. Vorzugsweise wird beim Abschalten des Verbrennungsmotors über die Start/Stopp-Funktion auch die Kupplung zwischen Verbrennungsmotor und elektrischer Maschine geöffnet.

Das erfindungsgemäße Verfahren zeichnet sich dadurch aus, dass beim Abschalten des Verbrennungsmotors über die Start/Stopp-Funktion dem Fahrer des Fahrzeugs der zukünftige Gang des Schaltgetriebes signalisiert wird, der beim Wiederanfahren des Fahrzeugs nach Beendigung der Start/Stopp-Funktion im automatischen Schaltgetriebe eingelegt wird. Dabei wird der zukünftige Gang des Schaltgetriebes vorzugsweise während der gesamten Abschaltung des Verbrennungsmotors bis zum Wiederanfahren des Fahrzeugs dem Fahrer signalisiert.

Das erfindungsgemäße Verfahren weist den Vorteil auf, dass dem Fahrer des Fahrzeugs bei über die Start/Stopp-Funktion abgeschaltetem Verbrennungsmotor der zum Wiederanfahren verwendete Gang vermittelt wird, obwohl dieser noch nicht im Getriebe eingelegt ist. Hierdurch wird ihm eine hilfreiche Information über die spätere Weiterfahrt gegeben. Insbesondere kann sich der Fahrer darauf einstellen, wie das Fahrverhalten des Fahrzeugs beim Wiederanfahren ist.

Das erfindungsgemäße Verfahren kommt insbesondere in einem Antriebsstrang zum Einsatz, bei dem die Verbindung zwischen elektrischer Maschine und Schaltgetriebe bei über die Start/Stopp-Funktion abgeschaltetem Verbrennungsmotor nicht unterbrochen ist und der Verbrennungsmotor nach Beendigung der Start/Stopp-Funktion über die elektrische Maschine gestartet wird. In diesem Fall ist es zwangsläufig erforderlich, dass bei Abschaltung des Verbrennungsmotors mittels der Start/Stopp-Funktion der Gang im Schaltgetriebe ausgelegt wird, da ansonsten das Fahrzeug bei Anlassen des Verbrennungsmotors über die elektrische Maschine anfährt.

In einer besonders bevorzugten Ausführungsform des erfindungsgemäßen Verfahrens wird der eingelegte Gang des Schaltgetriebes bei Stillstand des Fahrzeugs (d.h. der zuletzt vor Stillstand des Fahrzeugs eingelegte Gang) gespeichert. Dieser Gang wird im Rahmen der Start/Stopp-Funktion dem Fahrer als zukünftiger Gang signalisiert. Auf diese Weise wird dem Fahrer ein für ihn plausibler Gang signalisiert, der dann beim Wiederanfahren des Fahrzeugs genutzt wird.

Alternativ oder zusätzlich besteht auch die Möglichkeit, dass der zukünftige Gang des Schaltgetriebes, der dem Fahrer signalisiert wird und beim Wiederanfahren eingelegt wird, ein voreingestellter Anfahrgang ist. Dieser Anfahrgang kann gegebenenfalls in Abhängigkeit von dem Betriebszustand des Fahrzeugs variieren. Ist das Fahrzeug beispielsweise schwer beladen oder befindet es sich bei Stillstand an einer Steigung, wird gegebenenfalls ein niedrigerer Gang als in einer anderen Situation eingelegt.

Die Signalisierung des zukünftigen Gangs des Schaltgetriebes kann auf verschiedene Weise erfolgen. In einer Variante der Erfindung wird der zukünftige Gang des Schaltgetriebes dem Fahrer optisch signalisiert, insbesondere über ein Display im Fahrzeug, wie z.B. ein Display im Fahrzeugcockpit oder ein Head-up-Display. Dabei wird die entsprechende Gangnummer bzw. das entsprechende Gangsymbol des zukünftigen Gangs wiedergegeben. Zusätzlich oder alternativ besteht auch die Möglichkeit, dass der zukünftige Gang des Schaltgetriebes dem Fahrer akustisch und/oder haptisch signalisiert wird.

In einer weiteren Ausführungsform des erfindungsgemäßen Verfahrens wird bei über die Start/Stopp-Funktion abgeschaltetem Verbrennungsmotor eine Benutzerschnittstelle überwacht, über welche der Fahrer des Fahrzeugs einen zukünftigen Gang des Schaltgetriebes anwählen kann. Das heißt, es werden Eingaben an der Benutzerschnittstelle erfasst, welche einer Anwahl eines zukünftigen Gangs entsprechen. Als Folge wird ein über die Benutzerschnittstelle angewählter Gang dem Fahrer signalisiert. Dieser Gang wird dann beim Wiederanfahren des Fahrzeugs nach Beendigung der Start/Stopp-Funktion im Schaltgetriebe eingelegt. Auf diese Weise wird dem Fahrer die Möglichkeit gegeben, auch bei abgeschaltetem Verbrennungsmotor den von ihm bei der Wiederanfahrt gewünschten Gang auszuwählen und somit gegebenenfalls den aktuellen zukünftigen Gang zu verändern. Als Benutzerschnittstelle wird insbesondere der üblicherweise vorgesehene Gangwahlhebel eingesetzt, wobei das Einlegen des Gangs jedoch erst verzögert beim Wiederanfahren des Fahrzeugs erfolgt. Vorzugsweise kann über die Benutzerschnittstelle ferner die Gangstellung "ausgelegter Gang" (d.h. die Neutral-Stellung) angewählt werden, wobei bei dieser Anwahl das Schaltgetriebe bei Beendigung der Start/Stopp-Funktion in der ausgelegten Gangstellung verbleibt.

In der soeben erläuterten Ausführungsform kann ggf. auch überprüft werden, ob der über die Benutzerschnittstelle angewählte Gang zulässig ist, wobei nur ein zulässiger angewählter Gang dem Fahrer signalisiert wird und beim Wiederanfahren des Fahrzeugs nach Beendigung der Start/Stopp-Funktion im Schaltgetriebe eingelegt wird. Die Zulässigkeit eines Gangs kann je nach Ausgestaltung an verschiedene Kriterien gekoppelt sein. Zum Beispiel können nur bestimmte Gänge als Anfahrgänge zugelassen werden. Ebenso können der Betriebszustand des Fahrzeugs bzw. Umwelteinflüsse als Kriterien einfließen. Beispielsweise kann bei einem Wiederanfahren am Berg nur ein vorbestimmter kleiner Anfahrgang zugelassen werden.

Neben dem oben beschriebenen Verfahren betrifft die Erfindung ferner eine Vorrichtung zum Betreiben eines Antriebsstrangs eines Fahrzeugs mit Parallel-Hybrid-Antrieb. Der Antriebsstrang umfasst ein Antriebsaggregat mit einem Verbrennungsmotor und einer elektrischen Maschine, eine zwischen Verbrennungsmotor und elektrischer Maschine geschaltete Kupplung sowie ein automatisches Schaltgetriebe, welches zwischen dem Antriebsaggregat und einem Abtrieb angeordnet ist. In der Vorrichtung ist eine Steuereinrichtung vorgesehen, die eine Start/Stopp-Funktion bereitstellt, durch welche bei Vorliegen einer oder mehrerer vorbestimmter Bedingungen der Verbrennungsmotor bei Stillstand des Fahrzeugs abgeschaltet wird und ein eingelegter Gang im Schaltgetriebe ausgelegt wird. Die Steuereinrichtung zeichnet sich dadurch aus, dass sie beim Abschalten des Verbrennungsmotors über die Start/Stopp-Funktion einen Befehl an ein Signalisierungsmittel gibt, welches aufgrund des Befehls dem Fahrer des Fahrzeugs den zukünftigen Gang des Schaltgetriebes signalisiert, der beim Wiederanfahren des Fahrzeugs nach Beendigung der Start/Stopp-Funktion im Schaltgetriebe eingelegt wird.

Die erfindungsgemäße Vorrichtung ist vorzugsweise derart ausgestaltet, dass eine oder mehrere der oben beschriebenen Varianten des erfindungsgemäßen Verfahrens mit der Vorrichtung durchführbar sind.

Die Erfindung betrifft darüber hinaus ein Fahrzeug und insbesondere ein Kraftfahrzeug, vorzugsweise ein Nutzfahrzeug, welches die oben beschriebene erfindungsgemäße Vorrichtung beinhaltet.

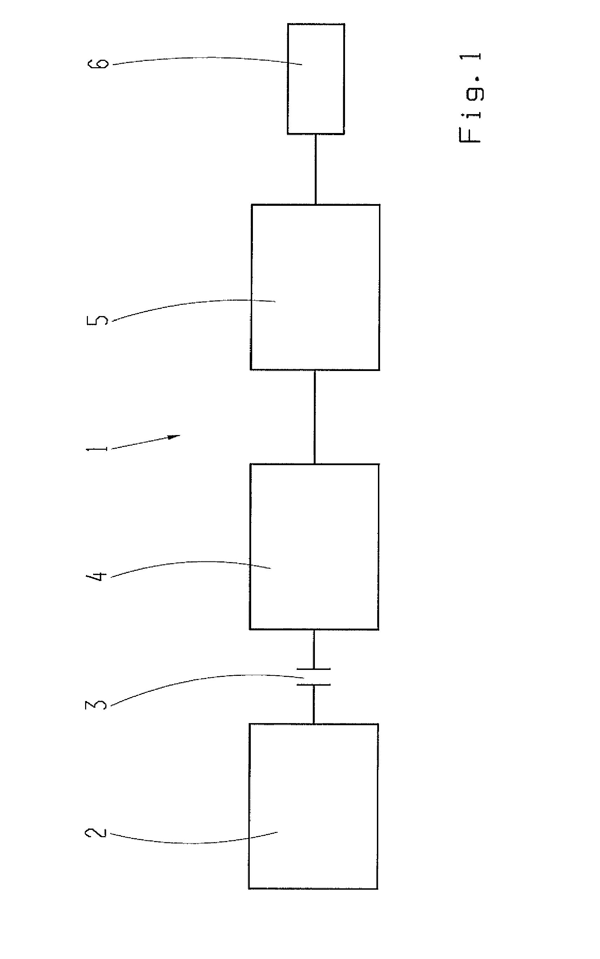

Ein Ausführungsbeispiel der Erfindung wird nachfolgend anhand der beigefügten Fig. 1 detailliert beschrieben. Diese Figur zeigt in schematischer Darstellung den Antriebsstrang eines Parallel-Hybrid-Antriebs, der mit einer Ausführungsform des erfindungsgemäßen Verfahrens betrieben wird.

Fig. 1 zeigt exemplarisch ein Antriebsstrangschema eines Kraftfahrzeugs, dessen Antriebsstrang 1 mit einer Variante des erfindungsgemäßen Verfahrens betrieben wird. Das Kraftfahrzeug ist dabei vorzugsweise ein Nutzfahrzeug, wie z.B. ein LKW oder ein Fahrzeug zur Personenbeförderung. Das erfindungsgemäße Verfahren kann jedoch auch in beliebigen anderen Fahrzeugen zum Einsatz kommen. Der dargestellte Antriebsstrang umfasst einen Verbrennungsmotor 2, der über eine Kupplung 3 mit einer elektrischen Maschine 4 verbunden ist. Hierdurch wird ein Antriebsaggregat gebildet, mit dem ein Antriebsmoment auf dem Antriebsstrang erzeugt wird. Die elektrische Maschine ist dabei mit einem (nicht gezeigten) elektrischen Energiespeicher verbunden, über den die Maschine als Elektromotor zum Antrieb des Antriebsstrangs genutzt werden kann. Die Maschine kann jedoch auch im generatorischen Betrieb Energie aus dem Antriebsstrang entnehmen, um diese zur Ladung des Energiespeichers zu nutzen. Das über das Antriebsaggregat erzeugte Antriebsmoment wird über ein automatisches Schaltgetriebe 5 an ein Achsgetriebe 6 und damit ein Abtrieb gegeben, um hierdurch das Fahrzeug fortzubewegen. Das Getriebe kann z.B. ein Synchrongetriebe, ein Klauengetriebe oder eine Mischform solcher Getriebe sein. Der Antriebsstrang der Fig. 1 stellt einen sog. Parallel-Hybrid-Antrieb dar, der sich dadurch auszeichnet, dass Verbrennungsmotor 2 und elektrische Maschine 4 gemeinsam auf den Antriebsstrang wirken können, wobei zur Abkopplung des Verbrennungsmotors vom Antriebsstrang die Kupplung 3 vorgesehen ist. Demgegenüber ist in der Ausführungsform der Fig. 1 zwischen elektrischer Maschine 4 und Getriebe 5 keine Kupplung vorgesehen, denn die Kraftübertragung der elektrischen Maschine kann elektrisch gesteuert werden.

Wie bereits oben erwähnt, verfügt der Antriebsstrang der Fig. 1 über ein automatisches Schaltgetriebe 5, dessen Schaltvorgänge in geeigneter Weise durch eine elektronische Steuereinrichtung gesteuert werden. Die Steuereinrichtung sendet dabei Befehle an entsprechende Aktuatoren, welche die Gänge des Getriebes sowie die Kupplung 3 und eventuell weitere Elemente betätigen. Die Aktuatoren werden in der Regel elektrisch, hydraulisch oder pneumatisch angetrieben. Gegebenenfalls kommen auch Kombinationen aus elektrischen und pneumatischen bzw. elektrischen und hydraulischen Aktuatoren zum Einsatz. Für Nutzfahrzeuge werden in der Regel pneumatische oder elektrisch-pneumatische Schaltsysteme verwendet. Während der Fortbewegung des Fahrzeugs wird der aktuell im Schaltgetriebe eingelegte Gang dem Fahrer des Fahrzeugs auf einem Display im Armaturenbrett angezeigt.

Der in Fig. 1 dargestellte Parallel-Hybrid-Antrieb verfügt ferner über eine an sich bekannte Start/Stopp-Funktion, die über eine elektronische Steuerung implementiert ist. Gemäß dieser Funktion wird bei Stillstand des Kraftfahrzeugs sowie bei Vorliegen unbestimmter Bedingungen der Verbrennungsmotor 2 abgeschaltet. Die vorbestimmten Bedingungen berücksichtigen dabei den aktuellen Betriebszustand des Fahrzeugs sowie gegebenenfalls Umwelteinflüsse (z.B. Außentemperatur), um sicherzustellen, dass das Abschalten des Verbrennungsmotors nicht zu einer zu starken Entladung der Batterie des Bordnetzes führt. Nach Abschalten des Verbrennungsmotors durch die Start/Stopp-Funktion wird der Verbrennungsmotor durch Öffnen der Kupplung 3 vom Antriebsstrang 1 getrennt. Die Start/Stopp-Funktionalität bewirkt ein Wiederanlassen des Verbrennungsmotors, sobald detektiert wird, dass der Fahrer seine Fahrt nach Stillstand fortsetzen möchte. Diese Detektion kann z.B. über das Lösen des Bremspedals bzw. die Betätigung des Gaspedals erfolgen. In der Ausführungsform der Fig. 1 wird das Anlassen des Verbrennungsmotors über die elektrische Maschine 4 des Hybridantriebs bewirkt. Hierzu wird die Kupplung 3 zwischen Verbrennungsmotor 2 und elektrischer Maschine 4 wieder geschlossen. Um das Anlassen zu ermöglichen, wird beim Abschalten des Verbrennungsmotors das automatische Getriebe 5 auf Neutral gestellt, d.h. der Gang im Getriebe wird ausgelegt. Ohne diese Funktion würde beim Anlassen des Verbrennungsmotors das Drehmoment der elektrischen Maschine auch auf den Abtrieb 6 übertragen werden.

In herkömmlichen Fahrzeugen mit Parallel-Hybrid-Antrieb wird auf dem Display im Fahrzeugcockpit immer der aktuelle Getriebezustand des automatischen Getriebes 5 auch bei Stillstand des Fahrzeugs angezeigt. Das heißt, beim Abschalten des Verbrennungsmotors 2 im Rahmen der Start/Stopp-Funktionalität wird die Stellung "Neutral" angezeigt. Dies ist nachteilhaft, denn dem Fahrer wird hierdurch nicht vermittelt, mit welchem Gang das Fahrzeug nach dem Wiederanlassen des Verbrennungsmotors anfährt. Zur Behebung dieses Nachteils wird in der Ausführungsform der Fig. 1 auf dem Display im Fahrzeugcockpit beim Abschalten des Verbrennungsmotors gemäß der Start/Stopp-Funktionalität derjenige Getriebegang angezeigt, der beim Wiederanfahren des Fahrzeugs eingelegt wird. Dem Fahrer wird somit vermittelt, dass der Gang zum Anfahren bereits eingelegt ist, wobei das Einlegen des Gangs jedoch erst beim Anfahren erfolgt, denn bei über Start/Stopp-Funktionalität abgeschaltetem Motor ist kein Gang im Getriebe eingelegt, wie oben beschrieben wurde.

In der hier beschriebenen Variante der Erfindung wird dem Fahrer somit bereits vor dem Anfahren über das Display vermittelt, mit welchem zukünftigen Gang er die Fahrt fortsetzen wird. Der zukünftige Gang kann dabei ein geeignet festgelegter Anfahrgang sein, wobei die Einstellung des Anfahrgangs gegebenenfalls basierend auf dem Betriebszustand des Fahrzeugs variieren kann. Ist das Fahrzeug z.B. schwer beladen bzw. ist das Fahrzeug an einer Steigung stehengeblieben, kann ein kleinerer Anfahrgang als in anderen Situationen gewählt werden. Gegebenenfalls besteht auch die Möglichkeit, dass als Gang zum Anfahren der vor dem Stillstand des Fahrzeugs eingelegte Gang verwendet wird. Dieser Gang wird gedanklich vom Fahrer als der eingelegte Gang angesehen, so dass ein für ihn plausibler Gang zum Anfahren genutzt wird. In einer besonders bevorzugten Ausführungsform der Erfindung besteht ferner die Möglichkeit, dass der Fahrer über eine Benutzerschnittstelle im Fahrzeug auch bei abgeschaltetem Motor einen zukünftigen, zum Anfahren zu verwendenden Gang spezifizieren kann, der ihm dann am Display angezeigt wird. Als Benutzerschnittstelle kann insbesondere der bereits vorhandene Gangwahlhebel genutzt werden. Dabei wird dem Fahrer suggeriert, dass er bei Betätigung des Hebels den gewünschten Gang einlegt, wobei jedoch das Einlegen des Gangs erst beim Wiederanfahren bewirkt wird.

Um in der Ausführungsform der Fig. 1 zu erreichen, dass der beim Anfahren zu verwendende Gang auf dem Display im Fahrzeug angezeigt wird, ist ein (nicht gezeigtes) Merkermodul in der Software der Steuereinrichtung des Hybridantriebs vorgesehen. Dabei wird der Gang, mit dem das Fahrzeug zum Stillstand gekommen ist, in dem Merkermodul zwischengespeichert, sofern dieser Gang beim Wiederanfahren verwendet werden soll. Soll ein anderer Gang zum Wiederanfahren verwendet werden bzw. wird der Gang durch den Fahrer verändert, wird dieser Gang in das Merkermodul geschrieben bzw. das Merkermodul mit diesem Gang überschrieben. Der Gang aus dem Merkermodul wird dann über eine entsprechende Signalisierung an das Display gegeben, das diesen Gang über alphanumerische Zeichen wiedergibt. Ist in dem Fahrzeug mit CAN-Bus gemäß dem Netzwerkprotokoll SAE-J1939 verbaut, wird herkömmlicherweise das SAE-Signal "Transmission Current Gear" (SPN 523) an das Display gegeben, so dass immer der aktuell eingelegte Gang und damit die Neutral-Stellung bei über die Start/Stopp-Funktion abgeschaltetem Motor angezeigt wird. In einer Variante der Erfindung wird nunmehr anstatt dem SAE-Signal (SPN 523) das SAE-Signal "Transmission Requested Gear Feedback" (SPN 3289) verwendet. Auf dieses Signal wird der Gang aus dem Merkmodul geschrieben und dieses Signal wird von dem Display eingelesen und zur Anzeige gebracht.

Das erfindungsgemäße Verfahren weist eine Reihe von Vorteilen auf. Insbesondere wird in einem Fahrzeug mit Parallel-Hybrid-Antrieb und automatischem Schaltgetriebe die Start/Stopp-Funktion dahingehend verbessert, dass bei abgeschaltetem Verbrennungsmotor dem Fahrer der zukünftige Gang angezeigt wird, der beim Wiederanfahren verwendet wird, und zwar unabhängig davon, in welchem Zustand das automatische Schaltgetriebe aktuell ist. Dem Fahrer wird somit die für ihn wichtige Information vermittelt, mit welchem Gang er später anfährt. In speziellen Ausführungsformen hat er dabei ferner die Möglichkeit, den zukünftigen Anfahrgang zu verändern. Das Verfahren der Erfindung kann in einfacher Weise in bereits bestehende Kommunikations-Infrastrukturen im Fahrzeug integriert werden, z.B. indem bereits bekannte Signale mit dem zukünftig einzulegenden Getriebegang belegt werden und zur Spezifikation der optischen Darstellung für das Display verwendet werden. Anstatt oder zusätzlich zu einer optischen Wiedergabe des zukünftigen Gangs sind auch andere Signalisierungen für den Gang denkbar, z.B. eine akustische oder haptische Signalisierung oder Kombinationen davon. Die haptische Signalisierung kann z.B. über das Lenkrad bzw. den Gangwahlhebel im Fahrzeug stattfinden.

### Bezugszeichen

- 1: Antriebsstrang
- 2: Verbrennungsmotor
- 3: Kupplung
- 4: elektrische Maschine
- 5: automatisches Schaltgetriebe
- 6: Abtrieb

## Patentansprüche

1. Verfahren zum Betreiben eines Antriebsstrangs eines Fahrzeugs mit Parallel-Hybrid-Antrieb, wobei der Antriebsstrang ein Antriebsaggregat mit einem Verbrennungsmotor (2) und einer elektrischen Maschine (4), eine zwischen Verbrennungsmotor (2) und elektrischer Maschine (4) geschaltete Kupplung (3) sowie ein automatisches Schaltgetriebe (5) umfasst, welches zwischen dem Antriebsaggregat und einem Abtrieb (6) angeordnet ist, wobei eine Start/Stopp-Funktion vorgesehen ist, durch welche bei Vorliegen einer oder mehrerer vorbestimmter Bedingungen der Verbrennungsmotor (2) bei Stillstand des Fahrzeugs abgeschaltet und ein eingelegter Gang im Schaltgetriebe (5) ausgelegt wird, **dadurch gekennzeichnet, dass** beim Abschalten des Verbrennungsmotors (2) über die Start/Stopp-Funktion dem Fahrer des Fahrzeugs der zukünftige Gang des Schaltgetriebes (5) signalisiert wird, der beim Wiederanfahren des Fahrzeugs nach Beendigung der Start/Stopp-Funktion im Schaltgetriebe (5) eingelegt wird.

2. Verfahren nach Anspruch 1, **dadurch gekennzeichnet, dass** der eingelegte Gang des Schaltgetriebes (5) bei Stillstand des Fahrzeugs gespeichert wird und dieser Gang im Rahmen der Start/Stopp-Funktion dem Fahrer als zukünftiger Gang signalisiert wird.

3. Verfahren nach Anspruch 1 oder 2, **dadurch gekennzeichnet, dass** der zukünftige Gang des Schaltgetriebes (5) ein voreingestellter Anfahrgang ist.

4. Verfahren nach Anspruch 3, **dadurch gekennzeichnet, dass** der voreingestellte Anfahrgang des Schaltgetriebes (5) in Abhängigkeit vom Betriebszustand des Fahrzeugs festgelegt wird.

5. Verfahren nach einem der vorhergehenden Ansprüche, **dadurch gekennzeichnet, dass** der zukünftige Gang des Schaltgetriebes (5) dem Fahrer optisch signalisiert wird, insbesondere über ein Display im Fahrzeug.

6. Verfahren nach einem der vorhergehenden Ansprüche, **dadurch gekennzeichnet, dass** der zukünftige Gang des Schaltgetriebes (5) dem Fahrer akustisch und/oder haptisch signalisiert wird.

7. Verfahren nach einem der vorhergehenden Ansprüche, **dadurch gekennzeichnet, dass** bei über die Start/Stopp-Funktion abgeschaltetem Verbrennungsmotor (2) eine Benutzerschnittstelle überwacht wird, über welche der Fahrer des Fahrzeugs einen zukünftigen Gang des Schaltgetriebes (5) anwählen kann, wobei ein über die Benutzerschnittstelle angewählter Gang dem Fahrer signalisiert wird und dieser Gang beim Wiederanfahren des Fahrzeugs nach Beendigung der Start/Stopp-Funktion im Schaltgetriebe eingelegt wird.

8. Vorrichtung zum Betreiben eines Antriebsstrangs eines Fahrzeugs mit Parallel-Hybrid-Antrieb, wobei der Antriebsstrang ein Antriebsaggregat mit einem Verbrennungsmotor (2) und einer elektrischen Maschine (4), eine zwischen Verbrennungsmotor (2) und elektrischer Maschine (4) geschaltete Kupplung (3) sowie ein automatisches Schaltgetriebe (5) umfasst, welches zwischen dem Antriebsaggregat und einem Abtrieb (6) angeordnet ist, wobei die Vorrichtung eine Steuereinrichtung umfasst, die eine Start/Stopp-Funktion bereitstellt, durch welche bei Vorliegen einer oder mehrerer vorbestimmter Bedingungen der Verbrennungsmotor (2) bei Stillstand des Fahrzeugs abgeschaltet wird und ein eingelegter Gang im Schaltgetriebe (5) ausgelegt wird, **dadurch gekennzeichnet, dass** die Steuereinrichtung derart ausgestaltet ist, dass sie beim Abschalten des Verbrennungsmotors über die Start/Stopp-Funktion einen Befehl an ein Signalisierungsmittel gibt, welches aufgrund des Befehls dem Fahrer des Fahrzeugs den zukünftigen Gang des Schaltgetriebes (5) signalisiert, der beim Wiederanfahren des Fahrzeugs nach Beendigung der Start/Stopp-Funktion im Schaltgetriebe (5) eingelegt wird.

9. Vorrichtung nach Anspruch 8, **dadurch gekennzeichnet, dass** die Vorrichtung zur Durchführung eines Verfahrens nach einem der Ansprüche 2 bis 7 ausgestaltet ist.

10. Fahrzeug, insbesondere Kraftfahrzeug, **dadurch gekennzeichnet**, das das Fahrzeug eine Vorrichtung nach Anspruch 8 oder 9 umfasst.
